Europäisches Patentamt

**European Patent Office**

Office européen des brevets

(11) Numéro de publication: **0 044 778 B1**

(12) **FASCICULE DE BREVET EUROPEEN**

(45) Date de publication du fascicule du brevet:
06.02.85

(51) Int. Cl.⁴: **E 21 B 17/043,** F 16 L 15/00

(21) Numéro de dépôt: 81401132.6

(22) Date de dépôt: 16.07.81

(54) **Joint pour tubes destinés notamment à l'industrie pétrolière.**

(30) Priorité: 17.07.80 FR 8015829

(43) Date de publication de la demande:
27.01.82 Bulletin 82/4

(45) Mention de la délivrance du brevet:
06.02.85 Bulletin 85/6

(84) Etats contractants désignés:
AT BE DE FR IT LU NL SE

(56) Documents cités:
BE - A - 520 079
CH - A - 432 952
DE - C - 460 381
FR - A - 2 066 455
US - A - 2 239 942
US - A - 2 367 929
US - A - 2 520 121
US - A - 2 886 382
US - A - 2 931 670
US - A - 3 295 578

(73) Titulaire: **VALLOUREC Société Anonyme dite., 7, place du Chancelier Adenauer, F-75116 Paris (FR)**

(72) Inventeur: **Plaquin, Bernard, 15, Rond Point des Accacias, F-59620 - Aulnoye Aymeries (FR)**
Inventeur: **Bounie, Paul, 12, rue Ampère, F-59620 - Aulnoye Aymeries (FR)**
Inventeur: **Mantelle, Jean, Allée de l'Ermitage, F-59620 - Aulnoye Aymeries (FR)**

(74) Mandataire: **Nony, Michel, 29, rue Cambacérès, F-75008 Paris (FR)**

## Description

La présente invention est relative à un joint pour tubes, plus spécialement pour tubes d'acier qui est destiné notamment à l'industrie pétrolière.

On connaît des joints utilisés dans l'industrie pétrolière dans lesquels les extrémités de deux éléments mâles sont réunies à l'aide d'un élément femelle, chaque élément mâle étant muni d'un filetage, par exemple tronconique, qui s'engage dans un filetage femelle correspondant pratiqué dans l'élément femelle.

On sait que dans les joints de ce type, les couples de dévissage des éléments mâles sont proportionnels aux couples de serrage. La constante de proportionalité dépend de paramètres tels que le type de graisse utilisée au vissage et l'état de surface des éléments, et a généralement une valeur comprise entre 1 et 1,3.

Il est cependant souhaitable pour certaines applications d'augmenter le couple de dévissage du joint et on a déjà proposé à cet effet différentes solutions.

La première solution qui est évidente consiste à augmenter le couple de vissage mais cette solution présente des limitations dues à la résistance mécanique du joint, à celle des moyens de serrage ou encore au marquage des éléments par les mors de vissage.

Une autre possibilité consiste à utiliser une graisse colle mais cette solution demande des préparations de surface particulières avec des temps de séchage qui dans certains cas sont incompatibles avec les temps de pose. D'autre part, le dévissage de tels joints filetés-collés demande la mise en place de moyens et de méthodes de dévissage particulier.

On connaît par ailleurs d'après le CH-A 432 952 un dispositif pour réaliser l'accouplement de deux éléments tubulaires qui comporte une bague qui est logée dans une gorge située dans l'élément femelle et qui s'engage partiellement dans une gorge de forme correspondante réalisé dans l'élément mâle, la forme biseautée de la bague lui permettant d'être déformé pour permettre le passage de l'élément mâle lors de son introduction. Les joints décrits dans ce brevet suisse ne comportent pas d'assemblage par filetages et le maintien de l'élément mâle dans l'élément femelle est simplement assuré par l'action de verrouillage assurée par la bague. Ces joints ne peuvent être utilisés dans l'industrie pétrolière qui nécessite des assemblages à haute résistance mécanique lesquels sont assurés par filetages.

La présente invention vise à fournir un joint pour tube notamment destiné à l'industrie petrolière, dans lequel le couple de dévissage est supérieur au couple de dévissage naturel.

A cet effet, la présente invention a pour objet un joint pour tube, notamment destiné à l'industrie pétrolière du type dans lequel une extrémité muine d'un filetage d'un élément mâle est vissé dans un élément femelle présentant un filetage corespondant, caractérisé par le fait que l'élément mâle possède à sa surface externe entre une extrémité du file fage et une surface conique, une gorge circonférentielle et que l'élément femelle possède à sa surface interne une gorge circonférentielle située en position vissée, en vis-à-vis de la gorge de l'élément mâle, une bague élastique étant prévue pour s'engager simultanément dans lesdites gorges, l'une au moins des gorges ayant une profondeur radiale suffisante pour permettre l'escamotage de la bague lorsque l'élément mâle est en cours d'engagement dans l'élément femelle.

À l'exception du mode de réalisation selon les figures 9 et 10 le dévissage ne peut ainsi s'effectuer qu'en cisaillant la bague élastique ce qui permet d'obtenir des couples de dévissage de l'ordre de 1,3 à 20 fois le couple de vissage. On notera que cet agencement permet d'obtenir un couple de dévissage calibré qui ne se substitue pas au couple de dévissage naturel des joints mais qui vient au contraire s'y ajouter.

La bague élastique peut être située soit au voisinage de l'extrémité de l'élément mâle, soit à celui de l'extrémité de l'élément femelle.

On peut également réaliser sur le même joint plusieurs dispositifs de bagues élastiques selon l'invention, notamment en plaçant une bague élastique au voisinage de chaque extrémité du filetage.

On comprend que de tels joints puissent être en particulier utilisés pour des conduites soumises pendant une longue période à des sollicitations par exemple en flexion ou en torsion, ou à des chocs tels que le couple de dévissage naturel puisse être atteint relativement facilement. Ces joints sont en particulier utiles lorsque les conduites soumises à ces sollicitations doivent néanmoins conserver une étanchéité parfaite mais ne sont plus accessibles après leur pose ce qui est en général le cas des conduites sous-marines pour hydrocarbures.

Le joint selon l'invention comporte par ailleurs d'autres avantages qui peuvent rendre son utilisation avantageuse dans des cas où l'augmentation du couple de dévissage n'est pas l'objectif principal.

On sait par exemple que pour les joints filetés utilisés dans l'industrie pétrolière il est utile d'avoir un moyen de limitation du couple de serrage pour éviter une déformation permanente du joint en cas de surcouple de serrage. On prévoit souvent à cet effet une butée métallique.

On conçoit que la bague élastique engagée selon l'invention simultanément dans les gorges de l'élément mâle et de l'élément femelle permet de remplacer avantageusement les butées connues du fait qu'elle travaille également au cisaillement pendant le vissage. De plus, l'agencement selon l'invention peut être utilisé dans des joints possédant une ou plusieurs butées ce qui permet d'assurer une sécurité supplémentaire permettant d'augmenter le couple maximum de vissage du joint.

Dans le cas d'un joint où un élément femelle réunit deux éléments mâles, l'invention permet d'assurer un positionnement bien déterminé d'un des éléments mâles dans l'élément femelle pendant le vissage ou le dévissage de l'autre élément mâle. Si l'invention n'est appliquée que d'un côté du joint, le dévissage est préférentiel et s'effectue toujours de l'autre côté.

Un autre des avantages de l'invention est qu'elle permet d'assurer un positionnement bien déterminé l'élément mâle dans l'élément femelle après serrage.

Ceci est en particulier nécessaire pour certains joints dans lesquels un élément mâle est monté en usine sur un manchon femelle, un autre élément mâle étant monté sur chantier. Pour que l'élément mâle monté sur chantier puisse se positionner correctement dans l'ensemble monté en usine, il est nécessaire que l'élément mâle monté en usine soit lui-même positionné avec précision.

Dans le joint selon l'invention, la bague élastique étant, en position de vissage, engagée simultanément dans une gorge de l'élément mâle et dans une gorge de l'élément femelle, on comprend que la position de l'élément mâle dans l'élément femelle peut être déterminée avec précision puisqu'elle ne dépend que des tolérances d'usinage des gorges.

Dans une forme préférée de l'invention, la gorge de l'élément femelle a une profondeur supérieure à l'épaisseur radiale de la bague élastique.

La mise en place de l'élément mâle dans l'élément femelle peut alors être réalisée en escamotant la bague élastique à l'intérieur de la gorge de l'élément femelle pendant le vissage de l'élément mâle, la bague élastique venant s'enclencher dans la gorge de l'élément mâle en fin de vissage.

Cet escamotage de la bague élastique dans la gorge de l'élément femelle est avantageusement réalisé par l'élément mâle lui-même. A cet effet, l'élément mâle possède une surface conique s'amincissant vers l'extrémité de l'élément mâle qui est susceptible de provoquer lors de son introduction dans l'élément femelle l'ouverture de la bague élastique disposée préalablement dans la gorge de l'élément femelle.

Dans une forme de réalisation particulière, cette surface conique de l'élément mâle est une surface d'étanchéité susceptible de coopérer avec une surface complémentaire de l'élément femelle en position de vissage.

Cependant, il est possible d'utiliser une surface conique prévue spécialement à cet effet afin d'éviter tout endommagement de la surface d'étanchéité par frottement sur la surface intérieure de la bague élastique.

Dans une autre forme de réalisation, la surface radialement intérieure de la bague élastique est conique. Sa plus grande ouverture étant disposée dans la gorge de l'élément femelle du côté de l'introduction de l'élément mâle pour coopérer avec une surface de cet élément lors de son introduction et provoquer ainsi l'ouverture de la bague élastique.

Bien entendu, des surfaces coniques peuvent être prévues à la fois sur l'élément mâle et sur la bague élastique pour permettre une ouverture plus aisée de celle-ci lors de l'introduction de l'élément mâle.

De préférence, la bague élastique a un diamètre intérieur au repos, inférieur au diamètre du fond de la gorge de l'élément mâle et la gorge de l'élément mâle a une profondeur inférieure à l'épaisseur radiale de la bague élastique.

Ainsi la bague élastique est, en utilisation, en appui par sa périphérie radialement intérieure sur le fond de la gorge de l'élément mâle. Cet agencement permet d'assurer le centrage de la bague élastique de sorte que lors du dévissage son cisaillement est effectué sur la totalité de sa périphérie.

La bague élastique est de préférence une bague fendue en un point de sa périphérie mais il va de soi que d'autres formes permettant une expansion radiale de la bague sont possibles.

La bague élastique peut être réalisée dans le même acier que celui du joint mais ceci n'est aucunement nécessaire. La bague élastique peut être réalisée en toute matière et notamment en matière synthétique.

En particulier, dans le cas où l'objectif essentiel du joint selon l'invention est d'obtenir un couple de dévissage élevé, la bague élastique sera réalisée de préférence dans un acier à plus basse limite élastique que celle du matériau dans lequel ont été usinées les gorges pour éviter la détérioration des faces des gorges perpendiculaires à l'axe du joint lors du dévissage.

Dans d'autres applications de l'invention comme celle où l'objectif essentiel est d'obtenir un positionnement rigoureux de l'élément mâle par rapport à l'élément femelle, on pourra utiliser un acier à limite élastique plus élevée que celle du matériau dans lequel ont été usinées les gorges par exemple un acier à ressort.

Dans un mode de réalisation particulier de l'invention, la bague élastique est constituée par un élément bimétallique circulaire qui, à la température ambiante, se comporte comme une bague du type préalablement décrit, mais qui, par élévation de température, peut se déformer spontanément de manière à s'appliquer au fond de la gorge qui contient entièrement la bague lors de l'engagement de l'autre élément.

On peut ainsi avoir un joint qui présente à l'état vissé toutes les qualités décrites ci-dessus et qui peut être dévissé soit en cisaillant la bague qui se comporte comme une bague normale, soit en portant le joint avant son dévissage à une température suffisante pour que, par l'effet de bilame, la bague vienne s'appliquer au fond de la gorge qui peut la contenir toute entière ce qui permet d'effectuer le dévissage du joint avec un couple qui correspond aux seuls frottements.

On va maintenant décrire à titre d'exemple non limitatif plusieurs modes de réalisation de l'invention qui sont représentés schématiquement sur le dessin annexé dans lequel:

La figure 1 est une vue en coupe axiale d'un premier mode de réalisation d'un joint selon l'invention,

La figure 2 est une vue en coupe axiale d'un joint selon un second mode de réalisation de l'invention,

La figure 3 est une vue en coupe à une plus grande échelle représentant dans un joint selon l'invention une étape de l'introduction d'un élément mâle dans un élément femelle muni d'une bague élastique,

La figure 4 est une vue similaire à la figure 3 représentant une étape ultérieure,

La figure 5 est une vue similaire aux figures 3 et 4 représentant le joint après vissage complet de l'élément mâle dans l'élément femelle,

La figure 6 est une vue en coupe axiale d'un joint selon l'invention représentant une première application de celle-ci, (augmentation du couple de dévissage),

La figure 7 est une vue similaire à la figure 6 représentant une autre application de l'invention, (positionnement des éléments et augmentation de couples de vissage et de dévissage) et

La figure 8 est une vue en coupe à plus grande échelle d'un joint selon une variante de l'invention,

La figure 9 est une variante de la figure 5 comportant un joint bimétallique,

et la figure 10 représente le joint bimétallique de la position de dévissage après réchauffage du joint.

Pour une meilleure lisibilité de ces figures, les proportions n'ont généralement pas été respectées. Il en est ainsi en particulier en ce qui concerne les jeux entre les bagues élastiques et les gorges qui les reçoivent.

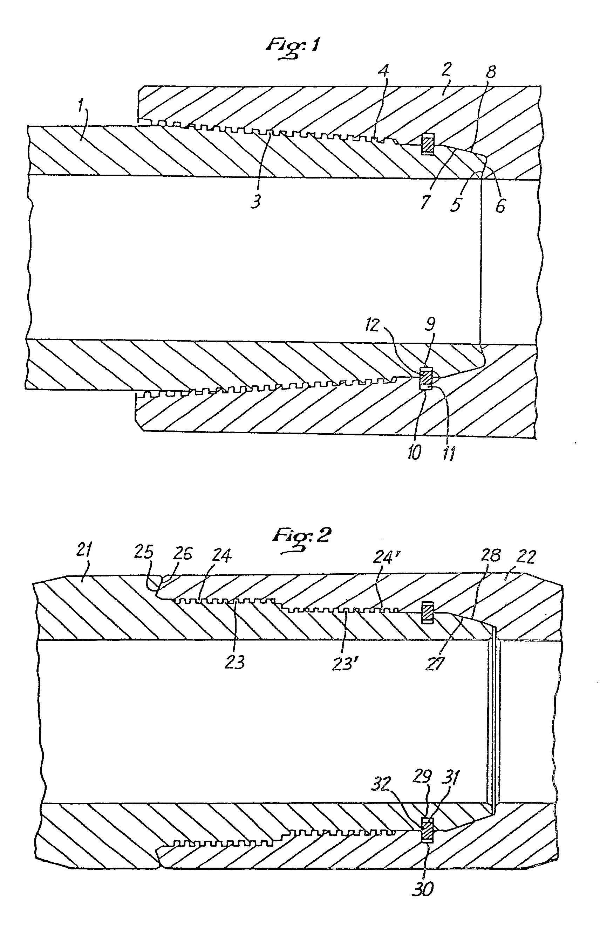

La figure 1 représente un joint selon l'invention dans lequel un élément mâle 1 est vissé dans un élément femelle 2. Des filetages extérieurs coniques 3 sont prévus à l'extrémité de l'élément mâle 1 pour coopérer avec des filetages coniques correspondants 4 réalisés à la surface intérieure de l'élément femelle 2. Ces filetages sont de préférence des filetages trapézoïdaux s'évanouissant à la surface extérieure de l'élément mâle 1.

L'élément femelle 2 est par exemple un manchon comportant à son autre extrémité, non représentée, un autre filetage symétrique du filetage 4 pour coopérer avec une extrémité d'un autre élément mâle et former ainsi un joint entre cet autre élément mâle et l'élément mâle 1.

Le joint selon l'invention comporte par ailleurs une surface de butée 5 à l'extrémité de l'élément mâle 1 susceptible de coopérer avec une surface de butée 6 de l'élément femelle. L'étanchéité est réalisée au moyen d'une surface conique d'étanchéité 7 de l'élément mâle qui coopère avec une surface conique d'étanchéité correspondante 8 de l'élément femelle.

L'élément mâle 1 comporte par ailleurs dans sa partie cylindrique comprise entre l'extrémité du filetage 3 et la surface d'étanchéité 7 une gorge circonférentielle 9.

De même, l'élément femelle comporte dans sa partie cylindrique comprise entre l'extrémité du filetage 4 et la surface d'étanchéité 8, une gorge circonférentielle 10.

Lorsque l'élément mâle 1 est complètement vissé dans l'élément femelle 2, c'est-à-dire lorsque les surfaces de butée 5 et 6 sont en contact, les gorges 9 et 10 sont en vis-à-vis comme cela est représenté à la figure 1. Dans cette position, les gorges 9 et 10 définissent un espace annulaire 11 dans lequel est disposée une bague élastique 12. La bague élastique est agencée de telle sorte qu'elle soit engagée simultanément dans les gorges 9 et 10.

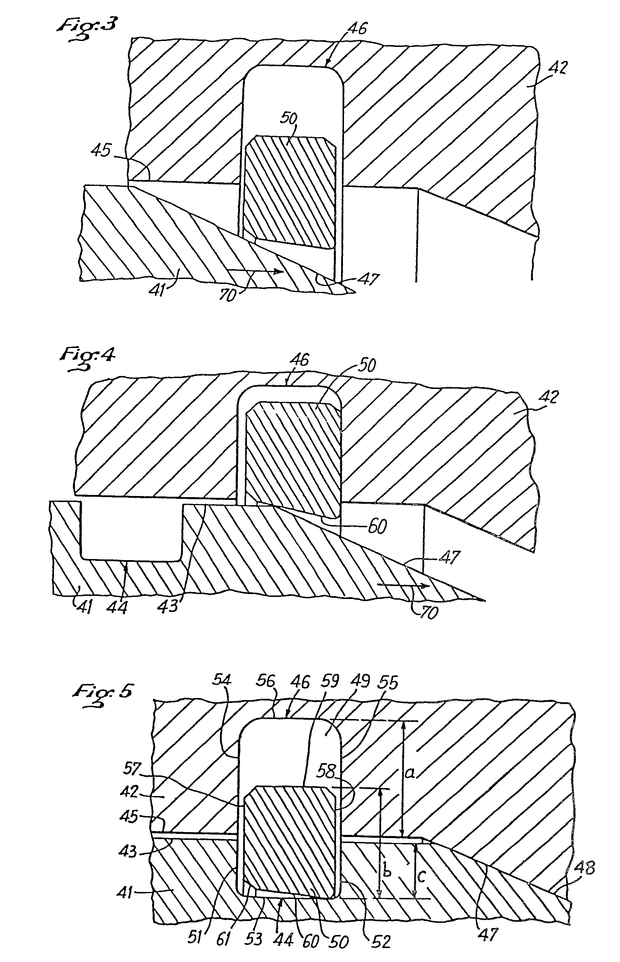

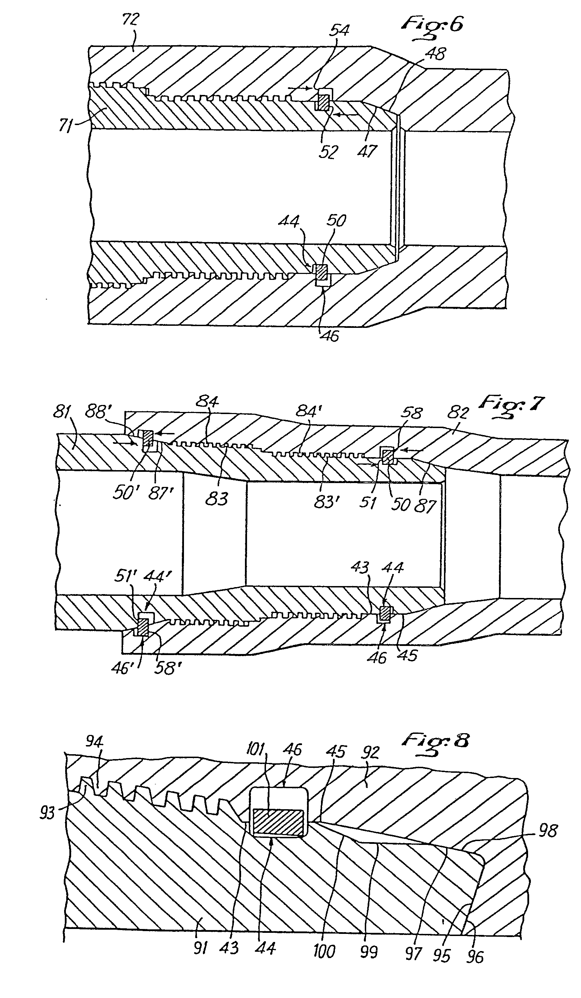

On décrira ci-après plus en détail la façon dont la bague élastique 12 est disposée dans l'espace annulaire 11 en référence aux figures 3 à 5. Néanmoins, on peut comprendre dès à présent qu'une fois dans la position représentée à la figure 1, le joint selon l'invention ne peut être démonté par dévissage de l'élément mâle 1 qu'après cisaillement de la bague élastique 12.

La figure 2 représente un autre joint selon l'invention.

Dans ce joint un élément mâle 21 comporte à son extrémité un filetage extérieur cylindrique à deux étages 23,23'. De même, l'élément femelle 22 comporte à son extrémité un filetage intérieur correspondant cylindrique à deux étages 24,24'. Les filetages 23,23' et 24,24' sont par exemple des filetages trapézoïdaux.

Une surface de butée externe 25 de l'élément mâle coopère par ailleurs avec une surface de butée correspondante 26 de l'élément femelle et l'étanchéité est assurée du côté radialement intérieur par une surface conique d'étanchéité 27 de l'élément mâle coopérant avec une surface correspondante conique d'étanchéité 28 de l'élément femelle 22.

Comme dans le cas précédent une gorge circonférentielle 29 est formée dans la partie cylindrique de l'élément mâle 21 comprise entre l'extrémité du filetage 23' et la surface d'étanchéité 27. De même, une gorge circonférentielle 30 est prévue dans l'élément femelle 22 dans sa partie cylindrique comprise entre l'extrémité du filetage 24' et la surface d'étanchéité 28.

Lorsque les surfaces 25 et 26 sont en butée, les gorges 29 et 30 sont en vis-à-vis et délimitent un espace annulaire 31, à l'intérieur duquel est disposée une bague élastique 32, de telle sorte qu'elle soit engagée simultanément dans les gorges 29 et 30.

Comme dans le cas précédent, les éléments 21 et 22 ne peuvent être dévissés qu'après cisaillement de la bague élastique 32.

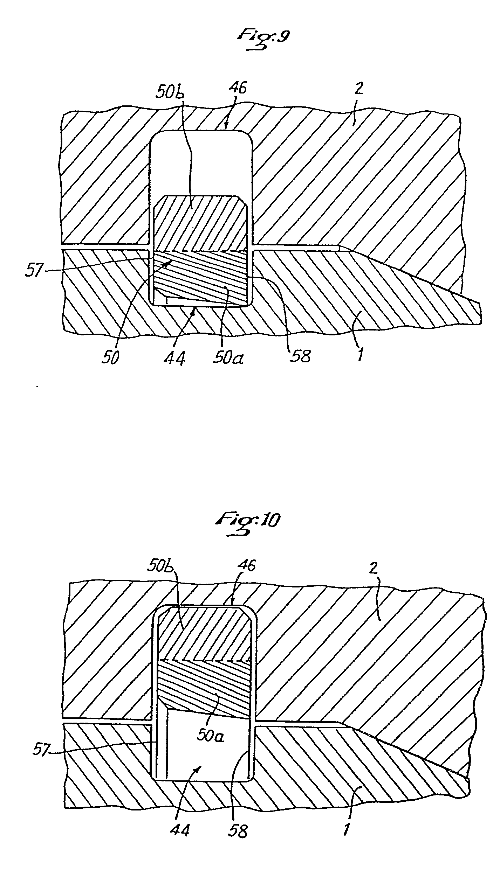

On décrira maintenant plus en détail en référence à la figure 5, la bague élastique du joint selon l'invention ainsi que les parties des éléments mâles et femelles dans lesquels sont ménagées les gorges circonférentielles.

Le joint représenté à la figure 5 comporte comme précédemment un élément mâle 41 et un élément femelle 42. Dans une partie cylindrique extérieure 43 de l'élément mâle 41 est formée une gorge circonférentielle 44 et dans une partie cylindrique intérieure 45 de l'élément femelle 42 est formée une gorge circonférentielle 46.

Par ailleurs, une surface conique 47 est prévue sur l'élément mâle 41 du côté de l'extrémité de cet élément par rapport à la gorge 44. Cette surface conique peut par exemple être une surface d'étanchéité coopérant avec une surface conique d'étanchéité correspondante 48 prévue sur l'élément femelle 42, mais cela n'est pas obligatoire.

Dans la position assemblée du joint, comme par exemple dans la position représentée aux figures 1 et 2, les gorges 44 et 46 se trouvent en vis-à-vis et délimitent une espace annulaire 49 dans lequel est disposée la bague élastique 50.

La gorge 44 de l'élément mâle 41 comporte deux faces latérales 51 et 52 perpendiculaires à l'axe du joint et une surface cylindrique de fond 53 coaxiale au joint. Dans le mode de réalisation décrit, la surface de fond 53 est reliée aux faces latérales 51 et 52 par des surfaces toriques.

De même, la gorge 46 comporte deux faces latérales 54 et 55 qui, dans le mode de réalisation représenté sont perpendiculaires à l'axe du joint, et une surface de fond cylindrique 56 coaxiale au joint. La surface de fond 56 est reliée aux faces latérales 54 et 55 par des surfaces toriques.

La bague élastique 50 est une bague fendue en un point de sa périphérie qui comporte deux faces latérales 57 et 58 et une surface extérieure 59 qui est une surface cylindrique perpendiculaire aux faces latérales 57 et 58.

Par contre, la surface intérieure 60 de la bague 50 est une surface conique dont le sommet est situé du côté de l'extrémité de l'élément mâle. La surface conique 60 est reliée du côté de son plus petit diamètre à la face latérale 58 par un arrondi et du côté de son plus grand diamètre à la face latérale 57 par un chanfrein 61.

Par ailleurs, la gorge 46 de l'élément femelle 42 a une profondeur a supérieure à l'épaisseur radiale b de la bague 50 alors que la gorge 44 de l'élément mâle 41 a une profondeur c inférieure à cette épaisseur radiale b.

Enfin, la bague fendue 50 a un diamètre intérieur au repos, (c'est-à-dire lorsqu'aucun effort dirigé vers l'extérieur ne la contraint à s'ouvrir), qui est inférieur au diamètre de la surface de fond 53 de la gorge 44, de sorte que lorsqu'elle est dans la position représentée à la figure 5, sa surface conique 60 est en appui sur la surface 53 par sa face de plus faible diamètre.

Le montage des joints décrit ci-dessus s'effectue de la façon représentée aux figures 3 et 4.

Comme montré à la figure 3, la bague 50 est tout d'abord introduite dans la gorge 46 de l'élément femelle 42 en la comprimant radialement vers l'intérieur pour lui permettre de franchir la surface cylindrique 45 puis en la laissant se détendre dans la gorge 46.

L'élément mâle 41 est alors engagé dans l'élément femelle 42 dans le sens de la flèche 70 par vissage des filetages correspondants, représentés par exemple aux figures 1 et 2.

Lorsque la surface conique 47 de l'élément mâle 41 vient au contact de l'arête de la bague 50 formée entre sa surface intérieure 60 et le chanfrein 61, elle provoque le centrage de la bague 50 sur l'axe du joint puis son expansion radiale.

Cette expansion se poursuit jusque dans la position représentée à la figure 4 où elle est alors provoquée par le contact de la surface conique 60 de la bague 50 avec l'arête de l'élément mâle 41 formée entre sa partie cylindrique 43 et sa partie conique 47. Cette expansion cesse lorsque cette arête vient au niveau de la partie de plus petit diamètre de la surface conique 60. Au cours de l'avance ultérieure de l'élément mâle 41 dans l'élément femelle 42 dans le sens de la flèche 70, cette partie de plus faible diamètre de la surface 60 se déplace le long de la surface 43 jusqu'à ce que la gorge 44 de l'élément mâle arrive en vis-à-vis de la gorge 46 de l'élément femelle 42. Ayant été précédemment expansée élastiquement, la bague 50 se contracte alors radialement en s'engageant dans la gorge 44 pour venir dans la position représentée à la figure 5.

Le démontage du joint selon l'invention s'effectue de la manière représentée à la figure 6 qui représente une partie d'un joint du type de celui de la figure 2.

Pour commencer à faire tourner l'élément mâle 71 par rapport à l'élément femelle 72, il faut tout d'abord atteindre le couple de dévissage naturel qui est généralement compris entre 1 fois et 1,3 fois le couple de vissage.

Après une très faible rotation correspondant à un déplacement axial des éléments l'un par rapport à l'autre de l'ordre du jeu axial de la bague 50 dans les gorges 44 et 46, la bague vient en appui sur la surface latérale 54 de la gorge 46 de l'élément femelle et sur la face latérale 52 de la gorge 44 de l'élément mâle.

En augmentant alors le couple de dévissage, on provoque tout d'abord un écrasement puis un cisaillement de la bague engendrant sa rupture et rendant possible le dévissage complet du joint.

Bien entendu le frettage des cônes d'étanchéité 47 et 48 sera calculé de telle sorte que dans la position représentée à la figure 6 où le couple de dévissage augmente brutalement, l'étanchéité soit encore assurée.

Par ailleurs, le couple de dévissage peut être calibré avec précision en fonction de la résistance au cisaillement du matériau dans lequel est réalisé la bague élastique 50 et de la dimension axiale de celle-ci.

Une autre application du joint selon l'invention est illustrée à la figure 7 qui représente un joint entre un élément mâle 81 et un élément femelle 82 qui comportent des filetages cylindriques correspondant à deux étages 83, 83' et respectivement 84, 84'.

Aucune surface de butée n'est prévue dans ce joint qui comporte par contre un cône d'étanchéité intérieur formé par la surface d'étanchéité 87 de l'élément mâle et la surface d'étanchéité 88 de l'élément femelle et un cône d'étanchéité extérieur formé par la surface d'étanchéité 87' de l'élément mâle et la surface d'étanchéité 88' de l'élément femelle.

Comme précédemment, une gorge 44 est formée dans la partie cylindrique 43 de l'élément mâle 81 comprise entre l'extrémité du filetage 83' et la surface conique d'étanchéité 87. De même, une gorge 46 est formée dans la partie cylindrique 45 de l'élément femelle comprise entre l'extrémité du filetage 84' et la surface conique d'étanchéité 88. Une bague élastique 50 est engagée dans les gorges 44 et 46.

De plus, une autre gorge 44' est formée dans la surface d'étanchéité conique 87' de l'élément mâle 81 et une gorge 46' est formée dans la surface d'étanchéité conique 88' de l'élément femelle 82. Une deuxième bague élastique 50' est disposée dans les gorges 44' et 46'.

Le montage de ce joint s'effectue comme celui des joints décrits ci-dessus si ce n'est que les deux bagues 50 et 50' sont disposées dans les gorges 46 et 46' de l'élément femelle 82 avant l'introduction de l'élément mâle 81. L'expansion radiale des bagues est réalisée par leur contact avec les surfaces coniques d'étanchéité 87 et 87' de l'élément mâle.

Un joint de ce type ne comportant pas de butée, un couple de serrage excessif pourrait conduire à une déformation permanente de l'élément femelle 82 dans les zones de ses surfaces d'étanchéité 88 et 88'. Cet inconvénient est supprimé par les bagues selon l'invention. En effet, une fois les bagues 50 et 50' engagées dans les gorges 44 et 44' de l'élément mâle 81, une très faible rotation amène la bague 50 à venir en contact avec la face latérale 58 de la gorge 46 de l'élément femelle et avec la face latérale 51 de la gorge 44 de l'élément mâle. De même, la bague 50' vient en contact avec la face latérale 58' de la gorge 46' de l'élément femelle et avec la face latérale 51' de la gorge 44' de l'élément mâle.

Dans cette position, qui est celle représentée à la figure 7, le couple de vissage augmente brutalement puisque le vissage ne pourrait être poursuivi que par écrasement et le cisaillement des bagues 50 et 50'. On comprend par conséquent que cet agencement protège le joint vis-à-vis des déformations permanentes qui pourraient résulter d'un couple de vissage excessif.

Bien entendu, le démontage du joint représenté à la figure 7 s'effectue comme celui des joints décrits ci-dessus, c'est-à-dire par cisaillement des bagues élastiques 50 et 50'.

Dans tous les joints décrits ci-dessus, l'expansion radiale de la bague élastique s'effectue au moyen d'une surface d'étanchéité conique de l'élément mâle.

Le joint représenté à la figure 8 est une variante dans laquelle l'expansion de la bague est réalisée au moyen d'une surface conique prévue spécialement à cet effet ce qui permet d'éviter le risque d'un endommagement éventuel des surfaces d'étanchéité de l'élément mâle.

Dans cette variante, un élément mâle 91 est monté sur un élément femelle 92 au moyen de filetages complémentaires 93 et 94. Comme précédemment une gorge 44 est formée dans une surface cylindrique 43 de l'élément mâle et une gorge 46 est formée dans une surface cylindrique 45 de l'élément femelle. L'élément mâle comporte une surface de butée 95 susceptible de coopérer avec une surface de butée 96 de l'élément femelle, les gorges 44 et 46 se trouvant en vis-à-vis lorsque ces surfaces 95 et 96 sont en butée.

L'élément mâle 91 comporte par ailleurs une surface conique d'étanchéité 97 susceptible de coopérer avec une surface conique d'étanchéité correspondante 98 de l'élément femelle 92.

La surface conique d'étanchéité 97 de l'élément mâle est prolongée par une surface cylindrique 99 puis par une deuxième surface conique 100. La bague élastique 101 a un diamètre intérieur minimum au repos supérieur au diamètre de la surface cylindrique 99 de l'élément mâle 91.

Ainsi, lorsque l'élément mâle 91 est engagé dans l'élément femelle 92, sa surface d'étanchéité 97 franchit la bague 101 sans venir à son contact et elle ne peut ainsi être endommagée. L'expansion de la bague 101 est ensuite effectuée au moyen de la surface conique 100 comme cela a été décrit précédemment.

On a représenté sur les figures 9 et 10 une variante de la figure 5 selon laquelle la bague élastique 50 est réalisée avec un élément bilame constitué par un métal 50a disposé à l'intérieur de la bague qui possède un coefficient de dilatation supérieur à celui du métal 50b qui constitue la partie externe de la bague 50.

Comme on le voit sur la figure 9, la bague bimétallique a la même forme que celle de la figure 5 et joue le même rôle en assurant la même fonction.

Par contre, lorsque l'on chauffe le joint à une température suffisante, par exemple de 200 à 300°C, le métal 50a se dilatant plus que le métal 50b, la bague 50 augmente de diamètre et vient s'appliquer spontanément au found de la gorge 46 comme on le voit sur la figure 10. On peut ainsi dévisser le joint sans avoir à cisailler la bague 50.

On comprend que si, lors du dévissage, la bague devait venir s'appliquer au fond de la gorge pratiquée dans l'élément mâle le métal qui a le plus grand coefficient de dilatation devait se trouver à l'extérieur de la bague 50.

On constate par conséquent que l'invention permet d'une part d'obtenir des couples de dévissage très importants et d'autre part d'éviter les inconvénients dus à un surcouple de vissage. Elle permet par ailleurs d'assurer un positionnement précis de l'élément mâle dans l'élément femelle. Les gorges de l'élément mâle et de l'élément femelle, tout en étant généralement en vis-à-vis lorsque le joint est monté peuvent d'ailleurs être légèrement décalées suivant le mode de fonctionnement.

Bien entendu, la forme en coupe axiale des gorges et de la bague qui a été décrite en détail en référence à la figure 5 n'est aucunement limitative. Toute autre forme rendant possible l'expansion radiale de la bague rentre dans le cadre de l'invention.

De même, les joints décrits sont des joints à filetages trapézoïdaux cylindriques ou coniques, mais l'invention est susceptible de s'appliquer à des joints d'un autre type.

Il va de soi que les bagues élastiques ne sont pas obligatoirement placées aux endroits exacts représentés sur le dessin. En particulier, on peut utiliser une bague élastique située au voisinage de l'extrémité de l'élément femelle comme par exemple la bague 58' de la figure 7. De même, l'utilisation de bagues élastiques selon l'invention est indépendante de la présence ou non de butées ou d'épaulement de limitation de vissage.

En outre, toutes les surfaces d'étanchéité décrites sont des surfaces coniques, mais l'invention pourrait évidemment être utilisée sur des joints possédant des surfaces d'étanchéité cylindriques.

Enfin, ce qui a été dit concernant les éléments mâles et femelles pourrait être inversé, la bague élastique étant tout d'abord mise en place dans la gorge de l'élément mâle et étant, lors du vissage, escamotée dans cette gorge par une surface de l'élément femelle.

## Revendications

1. Joint pour tube notamment destiné à l'industrie pétrolière, du type dans lequel une extrémité munie d'un filetage (3) d'un élément mâle (1), est vissée dans un élément femelle (2) présentant un filetage (4) correspondant, caractérisé par le fait que l'élément mâle (1) possède à sa surface externe entre une extrémité du filetage (3, 23', 83') et une surface conique (7, 27, 47, 87, 97), une gorge circonférentielle (9, 29) et que l'élément femelle possède à sa surface interne une gorge circonférentielle (10, 30) située en position vissée, en vis-à-vis de la gorge de l'élément mâle, une bague élastique (12, 32, 50) étant prévue pour s'engager à l'état vissé simultanément dans lesdites gorges (10 et 9, 29 et 30), l'une au moins des gorges ayant une profondeur radiale suffisante pour permettre grâce à une surface conique (47, 87, 88') d'un des éléments, l'escamotage de la bague lors de l'engagement de l'élément mâle (1) dans l'élément femelle (2).

2. Joint selon la revendication 1, caractérisé par le fait que la gorge (46) de l'élément femelle a une profondeur (a) supérieure à l'épaisseur radiale (b) de la bague élastique (50).

3. Joint selon l'une quelconque des revendications 1 et 2, caractérisé par le fait que l'élément mâle (1) possède une surface conique (7, 27) s'amincissant vers l'extrémité de l'élément mâle, susceptible de provoquer lors de son introduction dans l'élément femelle (2), l'ouverture de la bague élastique (12, 32) disposée préalablement dans la gorge (9, 29) de l'élément femelle (2).

4. Joint selon la revendication 3, caractérisé par le fait que la surface conique (7, 27) de l'élément mâle (1) est une surface d'étanchéité susceptible de coopérer avec une surface complémentaire de l'élément femelle (2) en position de vissage.

5. Joint selon l'une quelconque des revendications 1 à 4, caractérisé par le fait que la surface radialement intérieure (60) de la bague élastique (50) est conique, lorsqu'elle est disposée dans la gorge (49) de l'élément femelle (2), qui s'évase du côté de l'introduction de l'élément mâle, pour coopérer avec une surface de l'élément mâle lors de l'introduction de celui-ci et provoquer l'écartement de la bague élastique.

6. Joint selon l'une quelconque des revendications 1 à 5, caractérisé par le fait que la bague élastique (12, 32, 50) a un diamètre intérieur au repos qui est inférieur au diamètre du fond (44) de la gorge de l'élément mâle, et en ce qui la gorge de l'élément mâle a une profondeur (c) inférieure à l'épaisseur radiale (b) de la bague élastique.

7. Joint selon l'une quelconque des revendications 1 à 6, caractérisé par le fait que la bague élastique (12, 32, 50) est une bague fendue en un point de sa périphérie.

8. Joint selon l'une quelconque des revendications 1 à 7, caractérisé par le fait que la bague élastique (12, 32, 50) est constituée par un élément bimétallique (50a, 50b) qui peut par réchauffage du joint s'appliquer au fond d'une des gorges du joint pour permettre le démontage de ce dernier sans avoir à cisailler le joint.

## Patentansprüche

1. Rohrverbindung insbesondere für die Erdölindustrie, die jener Art angehört, bei welcher ein mit einem Gewinde (3) versehenes Ende eines Bolzenstücks (1) in ein Mutterstück (2) eingeschraubt ist, welches ein entsprechendes Gewinde (4) aufweist, dadurch gekennzeichnet, dass das Bolzenstück (1) an seiner Aussenfläche zwischen einem Ende des Gewindes (3, 23', 83') und einer konischen Fläche (7, 27, 47, 87, 97) eine Umfangsrille (9, 29) aufweist, und dass das Mutterstück an seiner Innenfläche eine Umfangsrille (10, 30) aufweist, welche in zusammengeschraubter Lage der Rille des Bolzenstücks gegenüberliegt, wobei ein elastischer Ring (12, 32, 50) vorgesehen ist, um in zusammengeschraubtem Zustand gleichzeitig in die genannten Rillen (10 und 9, 29 und 30) einzugreifen, und wobei mindestens eine der Rillen eine radiale Tiefe aufweist, welche ausreicht, um dank der konischen Fläche (47, 87, 88') eines der Stücke das Ausweichen des Ringes während des Eingriffs des Bolzenstücks (1) in das Mutterstück (2) zu gestatten.

2. Verbindung nach Anspruch 1, dadurch gekennzeichnet, dass die Rille (46) des Mutterstücks eine Tiefe (a) aufweist, welche grösser ist als die radiale Dicke (b) des elastischen Rings (50).

3. Verbindung nach jedem der Ansprüche 1 und 2, dadurch gekennzeichnet, dass das Bolzenstück (1) eine konische Fläche (7, 27) aufweist, welche sich zum Ende des Bolzenstücks hin verjüngt und in der Lage ist, während ihrer Einführung in das Mutterstück (2) das Öffnen des elastischen Ringes (12, 32) hervorzurufen, welcher vorher in die Rille (9, 29) des Mutterstücks (2) eingelegt wurde.

4. Verbindung nach Anspruch 3, dadurch gekennzeichnet, dass die konische Fläche (7, 27) des Bolzenstücks (1) eine Dichtungsfläche ist, welche imstande ist, mit einer komplementären Fläche des Mutterstücks (2) in zugeschraubter Lage zusammenzuwirken.

5. Verbindung nach jedem der Ansprüche 1 bis 4, dadurch gekennzeichnet, dass die radial innenliegende Fläche (60) des elastischen Ringes (50) konisch ist, wenn sie in der Rille (49) des Mutterstücks (2) liegt, und sich zur Seite der Einführung des Bolzenstücks hin aufweitet, um mit einer Fläche des Bolzenstücks während dessen Einführung zusammenzuwirken und das Aufweiten des elastischen Rings hervorzurufen.

6. Verbindug nach jedem der Ansprüche 1 bis 5, dadurch gekennzeichnet, dass der elastische Ring (12, 32, 50) in der Ruhelage einen Innendurchmesser aufweist, der kleiner ist als der Durchmesser des Bodens (44) der Rinne des Bolzenstücks, und dass die Rinne des Bolzenstücks eine Tiefe (c) aufweist, die kleiner ist als die radiale Dicke (b) des elastischen Ringes.

7. Verbindung nach jedem der Ansprüche 1 bis 6, dadurch gekennzeichnet, dass der elastische Ring (12, 32, 50) ein an einem Punkt seines Umfangs gespaltener Ring ist.

8. Verbindung nach jedem der Ansprüche 1 bis 7, dadurch gekennzeichnet, dass der elastische Ring (12, 32, 50) aus einem bimetallischen Element (50a, 50b) gebildet ist, welches durch Aufheizen der Verbindung sich gegen den Boden einer der Rinnen der Verbindung anlegen kann, um deren Zerlegen zuzulassen, ohne dass man die Verbindung aufschneiden muss.

## Claims

1. A pipe joint intended for the oil industry in particular, of the type wherein one end provided with a thread (3) of a male element (1), is screwed into a female element (2) having a corresponding thread (4), characterised in that the male element (1) has on its external surface between one end of thread (3, 23', 83') and a conical surface (7, 27, 47, 87, 97), a circumferential groove (9, 29) and that the female element has on its internal surface a circumferential groove (10, 30) situated in the screwed position, opposite the groove of the male element, provision being made for an elastic ring (12, 32, 50) to engage in the screwed state simultaneously in the said grooves (10 and 9, 29 and 30), at least one of the grooves having a radial depth which is adequate to allow the retraction of the ring by means of a conical surface (47, 87, 88') of one of the elements, when the male element (1) is engaged in the female element (2).

2. A joint according to Claim 1, characterised in that the groove (46) of the female element has a depth (a) which is greater than the radial depth (b) of the elastic ring (50).

3. A joint according to any one of Claims 1 and 2, characterised in that the male element (1) has a conical surface (7, 27) growing thinner towards the end of the male element, capable of causing, on being introduced into the female element (2), the opening of the elastic ring (12, 32) previously disposed in groove (9, 29) of the female element (2).

4. A jont according to Claim 3, characterised in that the conical surface (7, 27) of the male element (1) is a sealing surface capable of cooperating with a complementary surface of the female element (2) in the screwed down position.

5. A joint according to any one of Claims 1 to 4, characterised in that the radially internal surface (60) of the elastic ring (50) is conical, when it is disposed in groove (49) of the female element (2) which flares on the side of the insertion of the male element, to cooperate with a surface of the male element when the latter is being inserted and to produce the spreading out of the elastic ring.

6. A joint according to any one of Claims 1 to 5, characterised in that the elastic ring (12, 32, 50) has an internal diameter at rest which is smaller than the diameter of the bottom (44) of the groove of the male element, and in that the groove of the male element has a depth (c) which is smaller than the radial depth (b) of the elastic ring.

7. A joint according to any one of Claims 1 to 6, characterised in that the elastic ring (12, 32, 50) is a ring which is slit at one point of its periphery.

8. A joint according to any one of Claims 1 to 7, characterised in that the elastic ring (12, 32, 50) is constituted by a bimetallic element (50a, 50b) which, by the reheating of the joint may bear on the bottom of one of the grooves of the joint to allow the dismantling of the latter without having to cut the joint.

Fig. 1

Fig. 2

0 044 778

*Fig. 3*

*Fig. 4*

*Fig. 5*

11

Fig.6

Fig.7

Fig.8

*Fig. 9*

*Fig. 10*